# EUROPEAN PATENT APPLICATION

(11) **EP 4 814 192 A1**
(43) Date of publication of application: **30.09.2026**
(21) Application number: 24894044.7
(22) Date of filing: 12.11.2024
(51) Int. Cl.: D06M 17/00, A41D 31/00, A41D 31/102, B32B 27/12, B32B 27/34, B32B 27/36, D06M 17/04, D06M 17/08

(54) **FABRIC LAMINATE STRUCTURE AND WATERPROOF/BREATHABLE GARMENT**

(30) Priority: 21.11.2023 JP 2023197149
(71) Applicant: Toray Industries, Inc., Tokyo 103-8666 (JP)
(72) Inventor: KAWAHARA, Shinya, Otsu-shi, Shiga 520-2141 (JP); MATSUMOTO, Koichi, Otsu-shi, Shiga 520-2141 (JP)
(74) Representative: Mewburn Ellis LLP
(86) International application number: PCT/JP2024/040106
(87) International publication number: WO 2025/110052

(57) **Abstract**

An object is to provide a multilayer fabric structure and a waterproof breathable garment that are excellent in not only moisture permeability and waterproofness but also waterproofness after a long period of time (moisture and heat resistance), are excellent in recyclability, are highly practical, and have a waterproof breathable function.

The multilayer fabric structure of the present invention is a multilayer fabric structure including:
a woven or knitted fabric; and
a non-porous resin layer on the woven or knitted fabric, in which
the resin layer includes a resin A and an elastomer B,
the resin A and the elastomer B are a combination of either a polyamide and a polyamide-based elastomer or a polyester and a polyester-based elastomer, and
a phase of the resin A and a phase of the elastomer B have a co-continuous structure or a sea-island structure in which island phases are continuous.

## Description

### TECHNICAL FIELD

The present invention relates to a multilayer fabric structure and a waterproof breathable garment.

### BACKGROUND ART

Conventionally, in order to obtain a multilayer fabric structure excellent in moisture permeability and waterproofness, a method of so-called wet coating of polyurethane in which polyurethane is dissolved using a dimethylformamide solvent or the like, laminated on a woven fabric by coating or the like, and then introduced into water and solidified to form a microporous membrane to form a membrane having both moisture permeability and waterproofness, a method of laminating a resin membrane obtained by blending a hydrophilic resin having high moisture permeability using a polymer in which a hydrophilic moiety is introduced into a polymer chain on a woven fabric, or a method of bonding a stretched and expanded microporous polytetrafluoroethylene membrane to a woven fabric has been employed.

However, from the viewpoint of recent depletion of petroleum resources and resource saving for environmental preservation, recycling use of clothing articles has been emphasized. In a conventional waterproof breathable material, a material of a textile product used for a face fabric or a backing fabric is typically different from a material of a membrane having the above-described waterproof breathable function. For example, there is a three-layer laminated product in which a polyamide or polyester woven fabric is used as a face fabric, a polyurethane or polytetrafluoroethylene membrane as a waterproof breathable functional membrane is laminated thereon, and a polyamide knitted fabric is further laminated as a backing fabric. When these materials are used and disposed and then chemical recycling treatment is performed, it is necessary to individually classify and collect the face fabric, the waterproof breathable function membrane, and the backing fabric.

As an attempt to reduce the cost when classifying and collecting the materials as described above and to facilitate recycling, a membrane using a polyamide copolymer, which is a polyamide-based elastomer, singly has been proposed as a membrane having a waterproof breathable function (Patent Document 1).

### PRIOR ART DOCUMENTS

### PATENT DOCUMENTS

Patent document 1: Japanese Patent Laid-open Publication No. 2011-37101

### SUMMARY OF THE INVENTION

### PROBLEMS TO BE SOLVED BY THE INVENTION

However, it has been found that a membrane of a polyamide-based elastomer alone having moisture permeability as disclosed in Patent Document 1 has certain moisture permeability and waterproofness, but has low moisture and heat resistance, and the waterproofness is greatly deteriorated after a long period of time. In addition, a membrane using a polyamide such as polyamide 6 or polyamide 66 alone can suppress a decrease in waterproofness after a lapse of a long time, but is poor in moisture permeability as a waterproof breathable garment.

An object of the present invention is to solve the above problems, and to provide a multilayer fabric structure and a waterproof breathable garment that are excellent in not only moisture permeability and waterproofness but also waterproofness after a lapse of a long period of time (moisture and heat resistance), are excellent in recyclability, are highly practical, and have a waterproof breathable function.

### SOLUTIONS TO THE PROBLEMS

In order to solve the above-described problems, the present invention has the following configuration.
[1] A multilayer fabric structure including:
   a woven or knitted fabric; and
   a non-porous resin layer on the woven or knitted fabric, in which
   the resin layer includes a resin A and an elastomer B,
   the resin A and the elastomer B are a combination of either a polyamide and a polyamide-based elastomer or a polyester and a polyester-based elastomer, and
   a phase of the resin A and a phase of the elastomer B have a co-continuous structure or a sea-island structure in which island phases are continuous.
[2] The multilayer fabric structure according to [1], in which the resin A and the elastomer B are a combination of the polyamide and the polyamide-based elastomer.
[3] The multilayer fabric structure according to [2], in which the polyamide-based elastomer is a polyether ester amide including, as a copolymer component, dioxyethylene ether having a bisphenol A skeleton represented by a following structural formula (1). 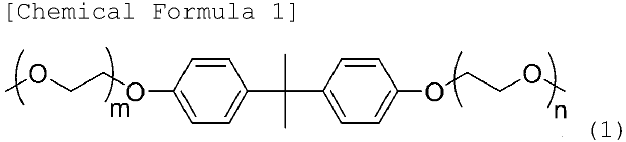
[4] The multilayer fabric structure according to [2] or [3], in which
   the phase of the resin A and the phase of the elastomer B have a sea-island structure in which island phases are continuous,
   the island phase includes the polyamide and the sea phase includes the polyamide-based elastomer, and
   the island phase has an average diameter of 5 to 200 nm.
[5] The multilayer fabric structure according to any one of claims [2] to [4], in which the woven or knitted fabric includes polyamide.
[6] The multilayer fabric structure according to [5], in which the fiber constituting the woven or knitted fabric is a fiber containing polyamide 6 as a major component, the resin A is polyamide 6, and the elastomer B is a polyamide 6-based elastomer.
[7] The multilayer fabric structure according to any one of [1] to [6], in which a moisture permeability in accordance with JIS L1099:2021 (A-1 method) is 3500 g/m²·24h or more, and a moisture permeability in accordance with JIS L1099:2021 (B-1 method) is 10000 g/m²·24h or more.
[8] The multilayer fabric structure according to any one of [1] to [7], in which the woven or knitted fabric has an elongation of 10% or more in at least one of a warp direction and a weft direction in accordance with JIS L1096:2010 elongation A method (constant rate of extension).
[9] A waterproof breathable garment including the multilayer fabric structure according to any one of [1] to [8].

### EFFECTS OF THE INVENTION

The present invention can provide a multilayer fabric structure and a waterproof breathable garment that are excellent in not only moisture permeability and waterproofness but also waterproofness after a lapse of a long period of time (moisture and heat resistance), are excellent in recyclability, are highly practical, and have a waterproof breathable function. The multilayer fabric structure and the waterproof breathable garment of the present invention can be used practically and suitably for sports clothing, uniform clothing, rainwear, and the like, and are also excellent in recyclability after use.

### BRIEF DESCRIPTION OF THE DRAWINGS

Fig. 1 is a schematic view showing an example of a case where island phases in a sea-island structure are continuous in a resin layer.
Fig. 2 is a schematic view showing an example of a case where island phases in a sea-island structure are not continuous in a resin layer.
Fig. 3 is a schematic view showing a method for calculating a maximum diameter of an island phase when the island phases overlap.

### EMBODIMENTS OF THE INVENTION

Hereinafter, the present invention will be described in detail.

The multilayer fabric structure of the present invention is a multilayer fabric structure having a woven or knitted fabric and a non-porous resin layer on the woven or knitted fabric. The above multilayer fabric structure of the present invention is suitably used for clothing such as sports clothing, uniform clothing, and rainwear, and in this case, it is preferable to use the above woven or knitted fabric side as a face fabric.

### [Woven or knitted fabric]

The multilayer fabric structure of the present invention has a woven or knitted fabric.

Examples of the fibers constituting the woven or knitted fabric include polyester fibers, polyamide fibers, polyethylene fibers, polypropylene fibers, polyurethane fibers, cotton, hemp, regenerated cellulose fibers, acrylic fibers, wool, and acetate fibers. Among these, from the viewpoint of recyclability, the resin is preferably the same type of resin as the resin A and the elastomer B of the resin layer described later, and when the resin A of the resin layer is polyamide and the elastomer B is a polyamide-based elastomer, the fibers constituting the woven or knitted fabric are also preferably made of polyamide.

The polymer constituting the polyamide fiber is a polymer having an amide bond, and specific examples thereof include aliphatic polyamides such as polyamide 6, polyamide 11, polyamide 12, polyamide 66, polyamide 46, polyamide 610, polyamide 56, and polyamide 510; semi-aromatic polyamides such as polyamide 6T and polyamide 9T using a diamine and terephthalic acid as raw materials, and polyamide 6I using hexamethylenediamine and isophthalic acid as raw materials; and wholly aromatic polyamides such as aramid obtained by a copolycondensation reaction of an aromatic diamine and a dicarboxylic acid.

Among the polyamide fibers, polyamide 6 fibers and polyamide 66 fibers are preferable from the viewpoint of cost and versatility, and the polyamide 6 fibers are more preferable from the viewpoint of moisture permeability and chemical recyclability.

As the fiber form, a multifilament is preferable, and a multifilament having a single-component yarn or a multifilament having a side-by-side or core-sheath type filament cross-section (hereinafter, may be referred to as "composite multifilament") are acceptable. The single-component yarn herein refers to a fiber composed of a single material, which may be a single polymer or a composition including two or more components, as a material constituting the fiber.

The core-sheath type described above may be an eccentric core-sheath type or a concentric core-sheath type.

The composite multifilament is preferably a side-by-side type latent crimped yarn or an eccentric core-sheath type latent crimped yarn, which is a composite structure in which three-dimensional coiled (helical) crimps are developed in fibers by a combination of polymers. When the side-by-side type or the eccentric core-sheath type is used as the composite structure, examples of the combination of polymers may be a combination of the same type of polymers having different viscosities or a combination of different types of polymers, and a combination of the same type of polyester-based polymers having different viscosities or a combination of different types of polyamide-based polymers such as polyamide 6 and polyamide 66 are suitably used.

Specific examples of the combination of two components of the material constituting the composite multifilament include polyamide 6 and polyamide 66, polyamide 6 and polyamide 610, and polyamide 66 and polyamide 610.

The fibers used for the woven or knitted fabric and the resin A and the elastomer B of the resin layer described later are made of the same type of resin, thereby providing excellent recyclability such as material recycling and chemical recycling. In addition, the smaller number of types of resins to be used causes the material recyclability to be more excellent, and the smaller number of types of monomer components causes the chemical recyclability to be more excellent, but materials to be used may be appropriately selected in view of functions and recyclability required in practical use.

The stretchability can be obtained by using, as a fiber, a textured yarn or a latent crimp yarn such as a side-by-side yarn of the polymers having a differential shrinkage. In addition, a covered yarn with an elastic yarn such as polyurethane (spandex) fiber may be used. However, when a product including a multilayer fabric structure is recycled, a higher blend ratio of polyurethane fiber, which is regarded as another material, causes a higher mixed ratio of another material (contamination rate, that is, proportion of contamination), relatively decreasing the content ratio of the material desired to be recycled. As a result, it is necessary to pay attention to the fact that the recyclability decreases.

In the present invention, in order to increase the recyclability, it is preferable to use a small number of types of constitutional units of the polymer component constituting the fiber in the woven or knitted fabric. For example, polyamide 6 has a caproamide unit as a constitutional unit, and this constituent unit is also a repeating unit. In addition, in the case of polyamide 66, a hexamethylene adipamide unit is a repeating unit, and this repeating unit includes a hexamethylene diamine residue and an adipic acid residue as constitutional units. When the fibers included in the woven or knitted fabric are a polyamide 6 fiber, a polyamide 66 fiber, and/or a composite multifilament made of a polyamide 6 and a polyamide 66, the constitutional unit includes three types of a caproamide unit, a hexamethylenediamine residue, and an adipic acid residue. When the fibers included in the woven or knitted fabric are a polyamide 66 fiber and a polyamide 610 fiber, the constitutional unit includes three types of a hexamethylenediamine residue, an adipic acid residue, and a sebacic acid residue. Particularly, the polymer constituting the fiber included in the woven or knitted fabric preferably has a single type of major repeating unit. For example, in the fiber-forming polymer in a woven or knitted fabric including a polyamide copolymer fiber having a caproamide unit (polyamide 6 unit) as a major constitutional unit and a polyamide 6 fiber made of a polycaproamide homopolymer, the major repeating unit is a single type of polyamide 6 unit. In addition, in the fiber-forming polymer in a woven or knitted fabric including polyamide 6 fibers made of a polycaproamide homopolymer and a small amount of polyurethane fibers, the major repeating unit is a single type of polyamide 6 unit. Further, in the fiber-forming polymer in a woven or knitted fabric including a polyamide 6 fiber and a composite multifilament of polyamide 6 and polyamide 66, polyamide 6 units and hexamethylene adipamide units (polyamide 66 units) are included in all the repeating units, and the unit having a higher proportion of the number of repeating units is defined as a major repeating unit. From the viewpoint of chemical recycling, the proportion of the major repeating unit in all the repeating units included in the fiber-forming polymer in a woven or knitted fabric is preferably as large as possible, and most preferably 100 mass%. As described above, in the case of using different types of elastic yarns such as polyurethane fibers or composite multifilaments made of different types of polymers, the content of the major repeating unit in the polymer constituting the fibers in a woven or knitted fabric is desirably higher, and is preferably at least 80 mass% or more, more preferably 85 mass% or more, and still more preferably 90 mass% or more.

The cross-section shape of the fiber is not particularly limited, and a wide variety of the shapes such as a circular shape, a triangular shape, and a hollow shape can be used. In addition, an additive that imparts antistatic properties and the like and a matting agent such as titanium oxide may be included in the yarn.

The total denier of the yarns used for a woven or knitted fabric is preferably 150 dtex or less. Reducing the thickness of the woven or knitted fabric enhances moisture permeability. If the yarns are excessively thin, tear strength or bursting strength is lowered, and thus 11 dtex or more is preferable. More preferably, 20 dtex or more and 75 dtex or less are more preferable.

Further, it is preferable to reduce the fabric density of the woven or knitted fabric as much as possible from the viewpoint of improving the moisture permeability, but when the fineness is the same or less and the fabric density of the woven or knitted fabric is reduced, the UV protection rate tends to decrease. For example, when the woven or knitted fabric is used as a face fabric and exposed to ultraviolet rays outdoors, the resin layer is irradiated with ultraviolet rays through the woven or knitted fabric. A larger amount of ultraviolet rays permeated through the woven or knitted fabric and irradiated to the resin layer causes the resin layer to be generally likely to deteriorate due to ultraviolet ray irradiation, and thus in consideration of these, the fabric density of the woven or knitted fabric or the fineness of the fibers to be used may be appropriately determined.

In addition, in the present invention, the woven or knitted fabric preferably has an elongation of 10% or more in at least one of the warp direction and the weft direction in accordance with JIS L1096:2010 elongation A method (constant rate of extension). In order to further increase the elongation for the woven or knitted fabric of the above aspect, stretchable fibers may be used as fibers such as polyamide fibers. In the case of a knitted fabric, the warp direction herein refers to a wale direction (for knits), and the weft direction refers to a course direction (for knits). In addition, an elongation of 10% or more in a woven or knitted fabric causes the wearing comfort to be improved, the application to be wider, and the degree of freedom of the sewing pattern to be further increased. The above elongation is more preferably 15% or more and 100% or less. The above elongation of more than 100% causes misalignment to be likely to occur in the laminating process with a waterproof moisture-permeable membrane, and productivity may be deteriorated.

The form of the woven fabric is not particularly limited, and a woven fabric such as plain, twill, satin and ripstop weave, double weave, oxford, or tussah is preferable.

The form of the knitted fabric is not particularly limited, and a fine-gauge and high-fabric density circular knit fabric or warp knit fabric is preferable.

### [Resin layer]

Then, the non-porous resin layer on the woven or knitted fabric will be described. Herein, the term "non-porous" means that there are no interconnected pores on the front surface and the back surface when the cross section of the resin layer is observed with an electron microscope according to the method described in Examples. In addition, the resin layer may be formed directly on the woven or knitted fabric, or another layer may be formed between the resin layer and the woven or knitted fabric.

In the present invention, the resin layer includes the resin A and the elastomer B. According to the above aspect, it is possible to achieve both the mechanical strength and waterproofness derived from the resin A and the softness and moisture permeability derived from the elastomer B. The elastomer as used herein refers to an elastomer that is deformed by a weak force and exhibits a property of rapidly returning to its original shape and size after removing the force as defined in JIS K 6200 (2019), and as a guide, the elastomer is stretched to 2 times its original length, held for 1 minute, and then shrunk to 1.5 times or less its original length within 5 minutes. In addition, the elastomer includes a thermoplastic elastomer defined in JIS K 6418:2017.

In addition, the resin A and the elastomer B are a combination of either a polyamide and a polyamide-based elastomer or a polyester and a polyester-based elastomer. As the material used for the waterproof breathable garment, a composite with a woven or knitted fabric made of polyamide or polyester is commonly used from the viewpoint of durability, cost, and versatility. Therefore, the resin layer having this configuration is advantageous in recycling, and the recyclability is easily improved. From the viewpoint of further enhancing the recyclability, when the woven or knitted fabric to be combined is made of polyamide, the resin layer of the multilayer fabric structure is preferably made of polyamide and a polyamide-based elastomer, and when the woven or knitted fabric to be combined is made of polyester, the resin layer of the multilayer fabric structure is preferably made of polyester and a polyester-based elastomer. Among these, from the viewpoint of weather resistance and mechanical strength, it is more preferable that the woven or knitted fabric to be combined with the fiber structure is made of polyamide, and the resin A and the elastomer B are a combination of polyamide and a polyamide-based elastomer.

The polyamide used for the resin A is a polymer having an amide bond, and specific examples thereof include nylon 6 (polyamide 6), nylon 11 (polyamide 11), nylon 12 (polyamide 12), nylon 66 (polyamide 66), nylon 46 (polyamide 46), nylon 610 (polyamide 610), nylon 56 (polyamide 56), and nylon 510 (polyamide 510), and among these, polyamide 6 and polyamide 66 are preferable from the viewpoint of cost and versatility, and polyamide 6 is more preferable from the viewpoint of moisture permeability and chemical recyclability.

Any polyamide-based elastomer can be used for the elastomer B as long as it is a polyamide-based copolymer and exhibits the behavior of the elastomer. Specific examples thereof include: a polyether ester amide made of
polyamide components such as polyamide 6, polyamide 11, polyamide 12, polyamide 66, polyamide 46, polyamide 610, polyamide 56, polyamide 510, and polyamide 6T or polyamide 9T, raw materials of which are diamines and terephthalic acid, poly(alkylene oxide)glycol components, and dicarboxylic acid components; and a polyether ester amide made of a polyamide component, a diol component, a poly(alkylene oxide)glycol component, and a dicarboxylic acid component. Among these, a polyether ester amide made of a polyamide component with high moisture permeability from the viewpoint of further improving moisture permeability, a poly(alkylene oxide) glycol component, and a dicarboxylic acid component, or a polyether ester amide made of a polyamide component, a diol component, a poly(alkylene oxide) glycol component, and a dicarboxylic acid component, is preferable. In addition, the elastomer B may include other copolymer components.

Further, a polyether ester amide including a dioxyethylene ether having a bisphenol A skeleton represented by the following structural formula (1) (hereinafter, also referred to as an ethylene oxide adduct of bisphenol A) as a copolymer component is more preferable. When water such as rain or sweat is absorbed as the waterproof breathable garment, the above aspect can suppress water swelling derived from the poly (alkylene oxide) glycol included in the elastomer B, and further improve the moisture and heat resistance, that is, the waterproofness after a long period of time. In addition, in the above polyether ester amide, the number average molecular weight of the dioxyethylene ether having a bisphenol A skeleton as a copolymer component is preferably 1,000 to 3,000 and more preferably 1,500 to 2,500.
Further, the dioxyethylene ether having a bisphenol A skeleton preferably has 15 to 70 mass%, more preferably 30 to 55 mass% based on the total amount of the polyether ester amide from the viewpoint of further improving the moisture permeability and moisture and heat resistance.

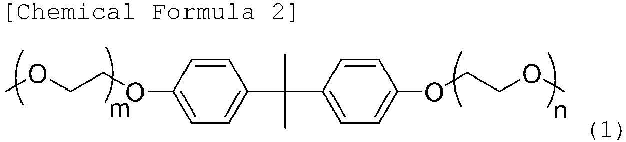

m and n in the structural formula (1) mean the polymerization degree of the dioxyethylene ether having a bisphenol A skeleton, and independent values are not determined, but the average value of m + n can be determined by calculation from the structure of the compound and the number average molecular weight. m + n is preferably 5 to 60, and more preferably 20 to 40.

In the present invention, the number average molecular weight can be calculated by the following formula when 1 g of a sample is heated with an excessive acetylating agent, for example, acetic anhydride to perform acetylation, and the amount (mg number) of potassium hydroxide necessary for neutralizing the acetylated product generated is denoted by A, and the amount (mg number) of potassium hydroxide necessary for neutralizing 1 g of the sample before acetylation is denoted by B. 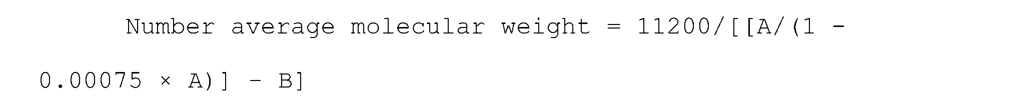 Number average molecular weight = 11200/[[A/(1 - 0.00075 × A)] - B]

In the polyether ester amide described above, as a component of the polyamide to be copolymerized, polyamide 6 and polyamide 66 are preferable from the viewpoint of cost and versatility, and polyamide 6 is more preferable from the viewpoint of moisture permeability and chemical recyclability.

In addition, in order to improve the recyclability, it is preferable to use the same polymer in the above woven or knitted fabric and the above resin layer, and it is more preferable that the fiber constituting the woven or knitted fabric is a fiber containing polyamide 6 as a major component, the resin A is polyamide 6, and the elastomer B is a polyamide 6-based elastomer from the viewpoint of moisture permeability and chemical recyclability. Herein, the phrase "containing polyamide 6 as a major component" refers to a fiber containing polyamide 6 in an amount of 50 mass% or more of the constituent components of the fiber. In addition, when the elastomer B is a polyamide-based elastomer, the same polymer is considered to be used if the major repeating unit of the polyamide component is the same as the major repeating unit in the polyamide constituting the resin A or the fiber.

It is important that the resin layer has a co-continuous structure of a phase of the resin A and a phase of the elastomer B or a sea-island structure thereof in which island phases are continuous. As a result of studies, the present inventors have found that the waterproofness after a long period of time is deteriorated only by simply mixing the resin A and the elastomer B, and the specific resin A and the elastomer B have a specific structure, thereby solving the above problems. That is, the moisture and heat resistance derived from the resin A and the moisture permeability derived from the elastomer B can be further enhanced by forming the above structure without completely compatibilizing the phase of the resin A and the phase of the elastomer B. The phase of the resin A and the phase of the elastomer B are completely compatible with each other, causing the degree of swelling when the membrane absorbs water to increase, and the strength of the membrane to decrease, thereby deteriorating the moisture and heat resistance, that is, the waterproofness after a long period of time. In addition, when the phase of the resin A and the phase of the elastomer B have a sea-island structure in which the island phases are not continuous, strain occurs in the membrane due to a difference in swelling behavior during water absorption between the phase of the resin A and the phase of the elastomer B, and cracks are easily generated, thereby deteriorating the moisture and heat resistance, that is, waterproofness after a long period of time.

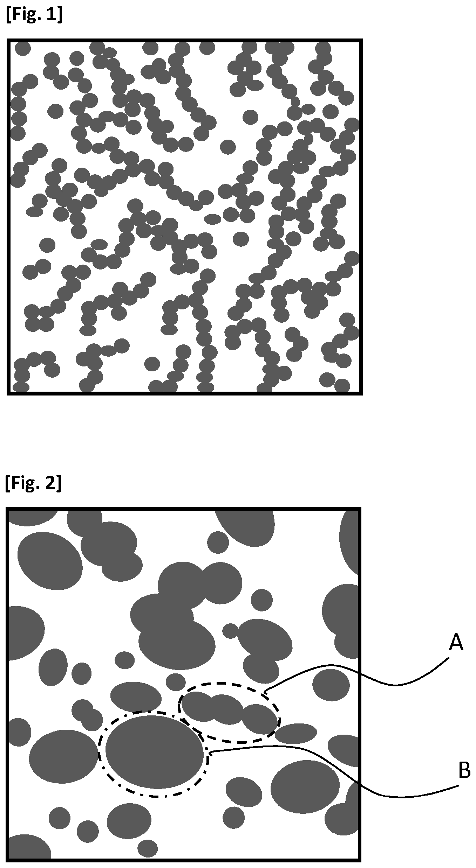

The co-continuous structure herein generally refers to a three-dimensionally continuous or connected structure (network structure). This is a well-known structural form exemplified in Non-Patent Document: "Polymer Alloy: Fundamentals and Applications, 2nd Edition", edited by The Society of Polymer Science, Japan, published by Tokyo Kagaku Dojin Co., Ltd., 1993. In addition, the sea-island structure in which island phases are continuous as referred to herein means that, as shown in Fig. 1, when an ultrathin section of a resin layer in which functional groups are appropriately stained using a transmission electron microscope (TEM) is observed at 5000 times, a continuous island phase in which 10 or more island phases are continuous occupies 50% or more of the area ratio of the island phase in the field of view. The term "continuous" as used herein means that the island phase interfaces are in contact or the interfaces are close to each other by 20 nm or less in the image. In addition, the number of continuous island phases is the number of units that can be divided into nearly circular shapes for the above image, and for example, it is determined that the island phase example B of Fig. 2 has one island phase and is not continuous, and the island phase example A has three island phases that are continuous (however, the number of the island phases of the island phase example A is three, and thus it is not determined that the "sea-island structure in which the island phases are continuous" is present based on the presence of the island phases). Adopting the above phase structure allows the island component to form a network, and the mechanical strength derived from the island component to be further improved while achieving characteristics of each phase, thus improving the moisture and heat resistance, that is, waterproofness after a long period of time. In order to obtain the above phase structure, it is effective to reduce the melt viscosity difference between the phase of the resin A and the elastomer B, preferably 200 poise (20 Pa·s) or less, and more preferably 0 to 100 poise (0 to 10 Pa·s). In addition, it is effective to set the content of the resin A or the elastomer B to 5 to 50% on a mass basis in the resin layer in order to stabilize the phase structure, more preferably 10 to 40%.

In addition, it is preferable that the phase of the resin A and the phase of the elastomer B have a sea-island structure in which island phases are continuous, the island phase is made of polyamide, and the sea phase is made of a polyamide-based elastomer from the viewpoint of improvement in the moisture permeability and moisture and heat resistance. Adopting the above structure makes it possible to suppress strain of the resin layer due to water swelling of the polyamide-based elastomer as a sea phase, thus further improving the moisture and heat resistance, that is, waterproofness after a long period of time. In order to obtain the above structure, it is effective to make the melt viscosity of the polyamide-based elastomer smaller than the melt viscosity of the polyamide, and specifically, the melt viscosity of the polyamide-based elastomer is preferably smaller than that of the polyamide by 1 to 200 poise (0.1 to 20 Pa·s), and more preferably smaller by 10 to 100 poise (1 to 10 Pa·s).

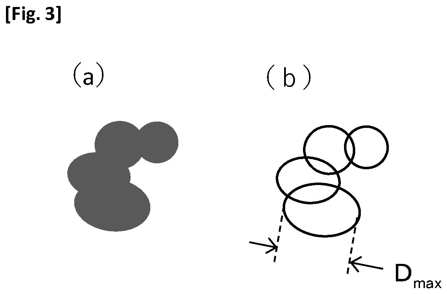

In addition, the average diameter of the island phase is preferably 5 to 200 nm. The average diameter of the island phase is 5 nm or more, thereby making it possible to prevent the island phase from becoming too fine, to sufficiently exert the mechanical strength derived from the island phase, and to further improve the moisture and heat resistance, that is, the waterproofness after a long period of time. The average diameter of the island phase is more preferably 50 nm or more. Meanwhile, the average diameter of the island phase is 200 nm or less, thereby making it possible to suppress the occurrence of local unevenness in the mechanical strength of the resin layer due to the coarsening of the island phase and to prevent the moisture and heat resistance, that is, the waterproofness after a long period of time from being deteriorated. The average diameter of the island phase is more preferably 150 nm or less. In the above aspect, it is effective to melt knead the phase of the resin A and the elastomer B by kneading or the like with a twin-screw extruder. The average diameter of the island phase in the present invention is a value obtained by observing the resin layer with a transmission electron microscope (TEM), randomly selecting 20 island phases, and calculating the average diameter from the number average of the maximum diameters of the respective island phases. When the island phase is not circular, the length of the long side is defined as the maximum diameter, and when the island phases overlap as shown in Fig. 3 (a), as shown in Fig. 3 (b), an approximate interface of each island phase is created by performing the separation of the ellipse by the least squares method described in The IEICE Transactions, Vol. J70-D, No. 6, pp. 1173-1180 (June 1987), and the maximum diameter of the island phase having the largest diameter is defined as Dmax.

The thickness of the resin layer is preferably 10 to 30 µm from the viewpoint of the physical strength of the resin layer and the texture of a waterproof breathable garment. When the thickness of the resin layer is less than 10 µm, the waterproofness is deteriorated. In addition, when the thickness is more than 30 µm, the moisture permeability is lowered. The thickness is preferably 15 to 25 µm.

The elongation of the resin layer is preferably 100% or more and less than 800%, and more preferably 200% or more and less than 600%. Setting the elongation of the resin layer to 100% or more is preferable because the softness after lamination of the membrane can be maintained and deterioration of the moisture permeability and the waterproofness during deformation of the laminate can be suppressed. In addition, setting the elongation of the resin layer to less than 800% is preferable because excessive elongation deformation of the membrane during deformation of the laminate can be suppressed, and deterioration of the moisture permeability and waterproofness can be suppressed.

As the stretchability of the resin layer, it is desirable that the resin layer has an excellent stretch recovery rate in addition to the above elongation. The stretch recovery rate of the resin layer is preferably 80% or more, and more preferably 90% or more. When the stretch recovery rate of the membrane is the above-described numerical value, the multilayer structure follows the movement of the body and has excellent conformability when worn as wear, thereby leading to an effect of easy movement and less fatigue.

In addition, the resin layer develops stretchability according to the ratio of the elastomer. It is possible to select a copolymerization ratio according to practicality and application from a balance with the moisture permeability and a balance with the water swellability, or select a copolymerization ratio from commercially available products.

### [Antioxidant]

In the present invention, an antioxidant is preferably used for improving the heat resistance of the resin layer to be used. Preferable examples of the antioxidant include a phenol-based antioxidant, a phosphorus-based antioxidant, and a sulfur-based antioxidant, and a hindered phenol antioxidant is particularly preferable. The resin layer preferably includes an antioxidant in an amount of 0.05 to 5.0 mass%, more preferably 0.5 to 4.0 mass%, and still more preferably 0.2 to 0.5 mass%.

### [Hydrolysis stabilizer]

In the present invention, it is preferable to use a hydrolysis stabilizer in order to improve the hydrolysis resistance of the resin layer to be used. Preferable examples of the hydrolysis stabilizer include a carbodiimide compound, an epoxy compound, and a chelating agent (metal deactivator). Epoxy compounds and chelating agents are particularly preferable from the viewpoint of suppressing thickening and process contamination due to gas. In addition, when a metal such as titanium is used as the ester-based resin polymerization catalyst, a reverse reaction of transesterification is suppressed by adding an octadecylphosphate-based chelating agent and hydrolysis resistance is further improved, which is thus a more preferable embodiment. The resin layer preferably includes a hydrolysis stabilizer in an amount of 0.05 to 3.0 mass%, and a more preferable amount added is 0.1 to 2.0 mass%.

### [UV absorber]

In the present invention, a UV absorber may be used to improve the light fastness of the resin layer to be used. Preferred examples of the UV absorber include benzotriazoles and benzophenones. Examples of the benzotriazoles include 2-(2'-hydroxy-5'-methylphenyl) benzotriazole, 2-(2-hydroxy-5-tert-butylphenyl)-2H-benzotriazole, and 2-[5-chloro-(2H)-benzotriazole-2-yl]-4-methyl-6-(tert-butyl) phenol, and examples of the benzophenones include 2-hydroxy-4-methoxy benzophenone and 2-hydroxy-4-n-octoxy benzophenone. The resin layer preferably includes a UV absorber in an amount of 0.05 to 1.0 mass%, and a more preferable content is 0.1 to 0.5 mass%.

### [Light stabilizer]

In the present invention, a light stabilizer may be further used in order to improve the light fastness of the resin layer to be used. As an example of the light stabilizer, N-R type hindered amines or the like are preferable. Examples of the N-R type hindered amines include bis(1,2,2,6,6-pentamethyl-4-piperidinyl)-[[3,5-bis(1,1-dimethylethyl)-4-hydroxyphenyl] methyl] butyl malonate, and 2,4-bis[N-butyl-N-(1-cyclohexyloyl-2,2,6,6-tetramethylpiperidic-4-yl) amino]-6-(2-hydroxyethylamine)-1,3,5-tetrazine of an N-OR type amine. The resin layer preferably includes a light stabilizer in an amount of 0.05 to 1.0 mass%, and a more preferable content is 0.1 to 0.5 mass%.

### [Pigment]

In the present invention, it is preferable to use a pigment for coloring the resin layer to be used and improving the color development of the multilayer fabric structure. Examples of the pigment to be used include calcium carbonate, barium sulfate, clays such as kaolin and talc, titanium oxide, and zinc oxide. Among these, titanium oxide is preferable from the viewpoint of stability and dispersibility, and rutile type titanium oxide having low photocatalytic activity is further preferable. The resin layer preferably includes titanium oxide in an amount of 0.1 to 3.0 mass%, and a more preferable content is 0.5 to 2.0 mass%. The content of titanium oxide is 0.1 mass% or more, allowing the color development of the multilayer fabric structure to be improved, and meanwhile, a content of 3.0 mass% or less leads to improvement in the softness of the resin layer.

### [Other additives]

In the present invention, a lubricant, a flame retardant, a heat stabilizer, a weathering agent, and the like may be appropriately blended in the resin layer to be used as necessary.

### [Others]

The multilayer fabric structure of the present invention is a multilayer fabric structure in which a resin layer is laminated on one surface of a woven or knitted fabric (hereinafter, also referred to as a two-layer laminate for convenience), and for example, when the resin A and the elastomer B are a combination of a polyamide and a polyamide-based elastomer and the woven or knitted fabric is made of a polyamide, it is also possible to further have a knitted fabric made of a polyamide filament (hereinafter, also referred to as a third-layer knitted fabric) on the resin of the multilayer fabric structure.

In a case where the multilayer fabric structure having the above third-layer knitted fabric is used for clothing or the like, it is preferable to use the third-layer knitted fabric side as a backing fabric (inner side) and the woven or knitted fabric side as a face fabric.

The multilayer fabric structure of the present invention can be used as a two-layer product of a woven or knitted fabric and a resin layer without attaching the knitted fabric of the third layer, but it is desirable to attach the knitted fabric of the third layer to function as a backing fabric also in terms of prevention of damage due to friction of the resin layer or the like and imparting a luxury.

For the knitted fabric of the third layer, a knitted fabric made of 100 wt% of polyamide multifilament is suitable. As such a polyamide multifilament, a multifilament made of polyamide 6, polyamide 66, or polyamide 610 is preferable.

As the fiber form, a single-component yarn of multifilaments or a composite multifilament is acceptable. The single-component yarn and the composite multifilament referred to herein are the same as those described above.

When the composite multifilament has a core-sheath type, the core-sheath type may be an eccentric core-sheath type or a concentric core-sheath type.

In the case of the composite multifilament, the same latent crimp yarn as described above is preferable. When the side-by-side type or the eccentric core-sheath type is used as the composite structure, examples of the combination of polymers may be a combination of the same type of polymers having different viscosities or a combination of different types of polymers, and a combination of the same type of polyester-based polymers having different viscosities or a combination of different types of polyamide-based polymers such as polyamide 6 and polyamide 66 are suitably used.

Specific examples of the combination of two components of the material constituting the composite multifilament include polyamide 6 and polyamide 66, polyamide 6 and polyamide 610, and polyamide 66 and polyamide 610.

The stretchability can be obtained by using a textured yarn or a latent crimp yarn such as a side-by-side yarn of a different polymer as the polyamide multifilament. In addition, a covered yarn with an elastic yarn such as polyurethane fiber may be used. However, when a product including a multilayer fabric structure is recycled, a higher blend ratio of polyurethane fiber, which is regarded as another material, causes a higher mixed ratio of another material, relatively decreasing the content ratio of the material desired to be recycled. As a result, it is necessary to pay attention to the fact that the recyclability decreases.

In the present invention, in order to increase the recyclability, a fiber component in the knitted fabric of the backing fabric is preferably 100 mass% of polyamide fibers including polyamide multifilaments. As described above, when a non-polyamide-based elastic yarn is used, the content of the polyamide fibers in the fibers constituting the knitted fabric is desirably high, and the ratio of the polyamide fibers is preferably at least 80 wt% or more, more preferably 85 mass% or more, and still more preferably 90 mass% or more.

Also in the knitted fabric of the third layer, similar to the woven or knitted fabric described above, using the polyamide multifilament leads to excellent recyclability such as material recycling and chemical recycling. In the fiber constituting the multilayer fabric structure, a smaller number of types of polyamides to be used leads to the more excellent material recyclability, and a smaller number of types of monomer components leads to the more excellent chemical recyclability, and materials to be used may be appropriately selected in view of functions and recyclability required in practical use.

The content of the major repeating unit in the polymer constituting the fiber in the multilayer fabric structure is desirably high, and is preferably at least 80 mass% or more, more preferably 85 mass% or more, still more preferably 90 mass% or more, and most preferably 100 mass%. The fiber in the multilayer fabric structure herein refers to a fiber included in the multilayer fabric structure including not only the woven or knitted fabric but also the knitted fabric of the backing fabric when the knitted fabric of the backing fabric is used.

In addition, the knitted fabric may be subjected to processing as necessary, such as water repellent finish, antistatic finish, antibacterial finish, UV absorption treatment, and NIR absorption treatment.

When a seam tape is used to maintain the waterproofness of the seam, the seam tape is typically adhered to the backing fabric with a molten resin, and it is preferable to use a knitted fabric having a low fabric density for the backing fabric such that the molten resin easily passes through the backing fabric and reaches the waterproof breathable film. Tricot or circular knit fabric is preferable from the viewpoint of being thin and having low fabric density.

The above third-layer knitted fabric is preferably laminated on the resin layer of the two-layered laminate with an adhesive.

As the adhesive for laminating the third-layer knitted fabric, a solvent-free hot melt adhesive is preferable as with the adhesive of the woven or knitted fabric described later. Examples of a resin having hot-melt adhesiveness include polyurethane-based resins, polyester-based resins, polyether-based resins, and polyamide-based resins, and polyurethane-based resins or polyamide-based resins, and the like are preferable in consideration of adhesiveness, flexibility, texture, stretch, and the like. In addition, a solvent-based adhesive can be suitably used. In addition, the method of applying the adhesive and the lamination conditions can be performed in the same manner as the bonding conditions of the woven or knitted fabric described later.

The multilayer fabric structure of the present invention preferably has an excellent moisture permeability. Preferably, the moisture permeability of JIS L1099:2021 (A-1 method) is 3,500 g/m²·24h or more, and the moisture permeability of JIS L1099:2021 (B-1 method) is 10,000 g/m²·24h or more. Herein, the moisture permeability in JIS L1099:2021 (A-1 method) is an index representing the water vapor transmission rate (WVTR), and the moisture permeability in JIS L1099:2021 (B-1 method) is an index representing the transmission rate of liquid phase moisture. The moisture permeability in JIS L1099:2021 (A-1 method) is more preferably 6,000 g/m²·24h or more, still more preferably 8,000 g/m²·24h or more. The moisture permeability in JIS L1099:2021 (A-1 method) is preferably as high as possible, but is practically 20,000 g/m²·24h or less. In addition, the moisture permeability in JIS L1099:2021 (B-1 method) is more preferably 20,000 g/m²·24h or more, still more preferably 30,000 g/m²·24h or more. The moisture permeability in JIS L1099:2021 (B-1 method) is preferably as high as possible, but is practically 100,000 g/m²·24h or less.

The multilayer fabric structure of the present invention has high waterproofness, and thus it is preferable that the multilayer fabric structure has a property of preventing rainwater penetration, that is, excellent performance such as a water resistance of at least 150 kPa or more. The water resistance is more preferably 200 kPa or more. Within the above range, rainwater penetration into clothes during wearing can also be suppressed. The water resistance is preferably as high as possible, but is practically 300 kPa or less.

In addition, from the viewpoint of securing durability of actual wear, the water resistance after an accelerated degradation test under high temperature and humidity is preferably 150 kPa or more. The water resistance is more preferably 200 kPa or more. Within the above range, the moisture and heat resistance is excellent, and the waterproofness after a long period of time can be enhanced. The accelerated degradation test under high temperature and humidity as used herein refers to treatment in a constant temperature and humidity chamber or the like at 70°C and 95%RH for 7 days. The water resistance after the accelerated degradation test under high temperature and humidity is preferably as high as possible, but is practically 300 kPa or less.

The multilayer fabric structure of the present invention is preferably subjected to a water repellent finish. Performing the water repellent finish leads to a more practical product as a waterproof breathable material, and the water repellent finish having high washing durability and friction durability is desirable. As the water repellent, known water repellents such as fluorine-based, silicone-based, and paraffin-based water repellents can be used. As the water repellent method, a conventional method such as pad-dry-cure can be used. During the water repellent processing, any method can be applied at any timing such as before and after laminating the resin layer.

Further, the processing as necessary such as antistatic finish, antibacterial finish, UV absorption treatment, or NIR absorption treatment may be performed.

### [Waterproof breathable garment]

The waterproof breathable garment including the multilayer fabric structure of the present invention has a high effect of preventing moisture buildup due to the high waterproofness and moisture permeability, and is excellent in wearing comfort and also excellent in waterproofness after a long period of time, and can be suitably employed for waterproof breathable garments such as outdoor clothing for mountain climbing and skiing, windbreakers, and rain wear.

### [Method for producing resin layer]

The resin layer used in the present invention can be produced by a conventionally known film forming method such as a T-die method or an inflation method. For example, the above-described polyamide, polyamide-based elastomer, and an optional component such as an antioxidant and titanium oxide are supplied to a single-screw extruder or a twin-screw extruder. Then, the resin in the extruder is heated to its melting point or more, and extruded by a T-die method from a die as a film, which melt-coats a carrier, for example, a lightweight polyester or release liner, is wound up and stored for use. A method in which resins or resins and additives are previously kneaded into a masterbatch by twin-screw kneading, the remaining components are blended so as to have a desired composition, and a membrane is formed by the above-described method is also preferably used for improving the dispersibility of the resins and the additives.

### [Method for producing multilayer fabric structure]

As a method for producing the multilayer fabric structure of the present invention, the multilayer fabric structure is produced by laminating the resin layer as described above on a base fabric including the woven or knitted fabric.

For example, the following method can be employed as such a laminating method, but the method is not limited at all.

That is, the method is a laminating method using an adhesive. Preferable examples of the adhesive include a common hot melt adhesive and a heat melt adhesive such as heat-bondable fiber. In addition, a solvent-based adhesive can be used. In a case where a heat melt adhesive is used, heat bonding can be performed using a heating device. When a common hot melt adhesive is used and its substantial use area is large, the moisture permeability of the fabric may often be deteriorated, and thus, it is preferable to use the adhesive itself made of a moisture-permeable resin.

In order to increase the accuracy of control of the peel strength and to stabilize the moisture permeability, the air permeability, and the water resistance of the multilayer fabric structure at a high level, the adhesive is preferably provided at an area ratio of 70% or less with respect to the woven or knitted fabric in the in-plane direction. The area ratio is more preferably 10 to 70%, and still more preferably 30 to 70%. In order to obtain the above area ratio, it is preferable to provide the adhesive in the shape of a point or a line in the in-plane direction.

It is preferable to reduce the area of the point and line of the adhesive and to reduce the area ratio of the adhesive, but the peel strength is reduced. Meanwhile, in order to improve the peel strength, it is preferable to increase the area of the point or line of the adhesive and increase the area ratio, and it is most preferable to use the full-surface adhesive layer, but the moisture permeability may decrease. In order to properly maintain the opposite functionalities, it is preferable to apply the adhesive in a dot pattern with an area of 0.1 to 100.0 mm² or a linear pattern or grid pattern with a line thickness of 0.1 to 10.0 mm, at an area ratio of 10 to 70%.

The dot pattern may be any form such as a circle, a quadrangle, a rhombus, an ellipse, or a triangle, and may be arranged with a combination of these forms to form a pattern or a character, or may be arranged in a logo mark of a trademark, or the like. In addition, the dots may be arranged to form a continuous pattern or may be arranged randomly. In addition, the linear pattern may be either a straight line or a curved line. The area ratio is the coverage ratio by the adhesive.

The adhesive is preferably a solvent-free hot melt adhesive. Examples of a resin having hot-melt adhesiveness include polyurethane-based resins, polyester-based resins, polyether-based resins, and polyamide-based resins, and polyurethane-based resins or polyamide-based resins are preferable in consideration of adhesiveness, flexibility, texture, stretch, and the like. In addition, a solvent-based adhesive can be suitably used.

In a method for applying the adhesive, a knife-over-roll coater, a bar coater, a gravure coater, or the like can be used, and in particular, a gravure coater can relatively easily apply the adhesive in a dot pattern, linear pattern, or grid pattern and is preferable from the viewpoint of moisture permeability, but the application method is not limited thereto.

In addition, the bonding method may be employed with choice depending on desired properties, such as a wet lamination or a dry lamination, and from the viewpoint of texture and adhesiveness, it is preferable to employ a dry lamination involving application of the adhesive to the woven fabric.

### EXAMPLES

The present invention will be described specifically with reference to examples, but the present invention is not limited to these examples. Various measurement methods in the present invention are as follows.

### (1) Thickness of film

An unrestrained film with no load applied was cut with a single-edged razor at 10 random locations, the cross section was observed with an electron microscope, the thickness was measured, and the average value was taken as the thickness.

### (2) Accelerated degradation test

The sample was treated in a constant temperature and humidity chamber maintained at 70°C and 95%RH for 7 days and 14 days.

### (3) Water resistance

Measurement was performed in accordance with JIS L1092:2009 water resistance B method (high water pressure method).

Measurement was performed provided that the non-stretch taffeta was superimposed on the back side (the side not exposed to water) such that the sample did not stretch. The number of samples at one level was 5, and the average value was taken as the water resistance.

In addition, the water resistance was measured using the sample after the accelerated degradation test, and was determined in the same manner.

### (4) Moisture permeability

Measurement was performed in accordance with JIS L1099:2021 calcium chloride method (A-1 method) and JIS L1099:2021 potassium acetate method (B-1 method).

Specifically, the measurement was performed by setting the multilayer fabric structure so as to apply water vapor (A-1 method) or water (B-1 method) to a surface opposite to the woven fabric surface. Provided that in both the test methods, the measurements were each converted into an amount of moisture permeated per 24 hours. The measurement was performed by setting the number of samples at one level to 3, and the average value was taken as the moisture permeability.

### (6) Elongation

Measurement was performed in accordance with JIS L1096:2010 elongation rate A method (constant rate of extension). Specifically, the stretch rate of a woven fabric sample in the warp and the weft directions was measured by adopting, as the stretch rate, an elongation at 14.7 N stress by a strip method with a grip interval of 200 mm and a width of 50 mm. The elongation was measured by setting the number of samples at one level to 3, and the average value was taken as the elongation.

### (7) Observation of resin layer

### (7-1) Observation of phase state

A section having a thickness of 100 nm was cut out in the thickness direction from a randomly selected portion of the resin layer, and the polyamide resin was selectively stained by a phosphotungstic acid staining method to clarify the dispersion of the polyamide resin, and then observation was performed at a magnification of 5,000 times with a transmission electron microscope.

### (7-2) Average diameter of island phase

After observation in an enlarged manner in the same manner as in the above (7-1), the average diameter of the island phase was determined from the number average of the maximum diameters of 20 island phases randomly selected from the obtained observation image. When the number of island phases in the field of view was less than 20, the average diameter was determined from the number average of the maximum diameters of all the island phases, diameters of which were able to be calculated.

### (8) Confirmation of non-porous film

The presence or absence of interconnected pores was measured on the front surface and the back surface in a case where cross sections of resin layers were observed at 5 places randomly selected with an electron microscope (SU3800 manufactured by Hitachi High-Tech Corporation, magnification: 2000 times).

### (9) Melt viscosity

A polymer in a chip form was caused to have a moisture content of 200 ppm or less with a vacuum dryer, and the melt viscosity was measured with Capilograph (L/D = 40) manufactured by TOYO SEIKI SEISAKU-SHO, LTD. while changing the strain rate stepwise. Evaluation was performed by setting a measurement temperature to be the same as the melting processing temperature, setting a period from the time when a sample was put into a heating furnace in a nitrogen atmosphere to the start of measurement to 5 minutes, and setting a value of a shear rate of 1216 s⁻¹ as the melt viscosity of the polymer.

### (10) Motion comfort

An outer jacket for mountain climbing was produced using the obtained multilayer fabric structure. The following judgment was made while the outer jacket was worn, and in the evaluation by 10 randomly selected persons, the judgment with the most frequent evaluation result was used as a result. In a case where there were a plurality of most frequent judgment results, the intermediate evaluation thereof was adopted. The size of the outer jacket to be worn by the wearers was set to a size (S, M, L) suitable for each body type on the basis of JIS L 4004:2001 9.
A: almost no pressed feel or tight feel from the fabric is felt, and the motion comfort is favorable.
B: although a pressed feel or a tight feel from the fabric is felt to some extent, it cannot be said that the motion comfort is poor.
C: a pressed feel or a tight feel from the fabric is much felt, and the motion comfort is poor.

### [Example 1]

Polyamide 6 semi-dull round cross-section multifilaments of 56 dtex/-42 filaments as warps and 78 dtex/-34 filaments as wefts were false-twisted so as to have stretchability. Subsequently, the textured yarns were used as warps and wefts, and woven by a water jet loom such that the fabric density of warp × weft was 111 yarns/2.54 cm × 77 yarns/2.54 cm. Then, the fabric was scoured and relaxed, and then preset and dyed by a liquid flow dyeing machine by a conventional method, then a 5% aqueous solution of "AsahiGuard" (registered trademark) AG710 (fluorine-based water repellent, manufactured by Asahi Glass Co., Ltd.) was applied to the fabric surface by a pad-dry-cure method so as to have an attachment rate of 60%, dried at 120°C for 1 minute, then heat-treated at 170°C for 40 seconds, and finally set to finish the fabric with a warp and weft fabric densities of 154 yarns/2.54 cm and 122 yarns/2.54 cm, thereby obtaining a fabric.

Meanwhile, as a method for preparing a polyamide-based elastomer for forming a resin layer, 45 parts of caprolactam, 45 parts of an ethylene oxide adduct of bisphenol A having a number average molecular weight of 1,500, represented by the formula (1), 5 parts of polyethylene glycol having a number average molecular weight of 1,500, and 5.82 parts of terephthalic acid with the amount of carboxyl groups [COOH] corresponding to [OH]/[COOH] = 0.95 with respect to the amount of hydroxyl groups [OH] derived from poly(alkylene oxide)glycol were charged into a reaction vessel together with 0.5 parts of an antioxidant ("Irganox" (registered trademark) 1098, manufactured by Ciba Japan K.K.), purged with N₂, heated and stirred at 260°C for 60 minutes to form a transparent homogeneous solution, and then decompressed to 0.07 kPa or less. 0.1 parts of tetrabutyl titanate was added, and the reaction was terminated when the stirring torque reached 11 kg·m (11 r/min) under the conditions of a pressure of 0.07 kPa or less and a temperature of 260°C. The reaction time was 2.1 hours, and thus a polyether ester amide (A) having a crystallization temperature of 115.0°C, an unreacted lactam content of 0.24%, an amino group amount of 0.48 × 10⁻⁵ eq/g, and a melt viscosity of 920 poise (92 Pa·s) was obtained.

Pellets of the polyether ester amide (A) and pellets of the polyamide 6 having a melt viscosity of 960 poise (96 Pa·s) were dried under reduced pressure at 110°C for 14 hours to adjust the moisture content to 300 ppm or less, and a total of 100 parts of 80 parts of the polyether ester amide (A), 17 parts of the polyamide 6, 2 parts of rutile type titanium oxide, and 1 part of hindered phenol antioxidant were melt blended using a twin-screw extruder having screws of a three-start thread type with 45 mmφ at a cylinder temperature (melting processing temperature) set to 255°C, then discharged into strands, cooled in a water bath, and subsequently pelletized into a size of φ3 mm and a length of 3 mm with a pelletizer. The obtained pellets were dried under reduced pressure at 110°C for 14 hours to adjust the moisture content to 300 ppm or less, and then melt-extruded from a T-slit die at a cylinder set temperature of 255°C using a single screw extruder to fabricate an unstretched film (resin layer) having a thickness of 20 µm (basis weight: 18 g/m²). The obtained resin layer had no interconnected pores and was non-porous.

A moisture-curable polyurethane hot-melt adhesive was heated and dissolved at 110°C, applied onto the woven fabric with a gravure coater equipped with a gravure roll in which a 0.40 mm × 0.40 mm square (depth: 20 µm) depression was engraved at an angle of 45° with respect to the traveling direction of the woven fabric and with 40 meshes, and dried at 120°C for 1 minute. As a result, the adhesive was applied in a dot pattern to the fabric, and each of the dots was a square 0.40 mm on each side and the dots were disposed at an angle of 45° with respect to the length direction. In addition, the area ratio (coverage ratio) of the adhesive to the fabric was 40%, and the adhesive application amount was 15 g/m².

Then, the non-stretched film obtained above was overlaid on the adhesive side of the woven fabric coated with the above adhesive, and a linear pressure of 49 N/cm was applied between a metal roll and a rubber roll at a temperature of 110°C, and then, aging was performed at room temperature for 48 hours to obtain a two-layer laminate in which the woven fabric and the film (resin layer) were laminated.

Then, a moisture-curable polyurethane hot-melt adhesive was applied to a sinker surface of a half tricot dyed gray using a polyamide 6 semi-dull round cross-section multifilament of 22 dtex-16 filaments in the same manner as the application of the adhesive to the woven fabric, and a knitted fabric was laminated thereon (area ratio: 40%, amount of attached resin: 10 g/m²) so as to be bonded to the surface on the film (resin layer) side of the above two-layer laminate to fabricate a three-layer multilayer fabric structure.

The configurations and various evaluation results of the obtained face fabric, resin layer, and multilayer fabric structure are shown in Table 1. The results were excellent waterproof moisture permeability and motion comfort, and excellent moisture and heat resistance with a water resistance of 230 kPa in the accelerated degradation test (7 days). In addition, the phase state of the obtained resin layer had a sea-island structure in which island phases were continuous as shown in Fig. 1. In addition, the island phase was made of polyamide 6, and the sea phase was made of polyether ester amide (A). The fiber in the multilayer fabric structure accounted for 100 mass% of the polyamide 6 fiber, and the major repeating unit in the polymer constituting the fiber also accounted for 100 mass% of the polyamide 6 unit.

### [Example 2]

A multilayer fabric structure was obtained in the same manner as in Example 1 except that the backing fabric was not bonded in Example 1 to provide a two-layer laminate.

The configurations and various evaluation results of the obtained face fabric, resin layer, and multilayer fabric structure are shown in Table 1. The results were excellent waterproof moisture permeability and motion comfort, and excellent moisture and heat resistance with a water resistance of 230 kPa in the accelerated degradation test (7 days).

### [Example 3]

As a method for preparing a polyamide-based elastomer for forming a resin layer of Example 1, 45 parts of caprolactam, 50 parts of polyethylene glycol having a number average molecular weight of 1,500 without using an ethylene oxide adduct of bisphenol A, and further 5.82 parts of terephthalic acid with the amount of the carboxyl group [COOH] corresponding to [OH]/[COOH] = 0.95 with respect to the hydroxyl group amount [OH] derived from a poly(alkylene oxide)glycol, were charged into a reaction vessel together with 0.5 parts of an antioxidant ("Irganox" (registered trademark) 1098, manufactured by Ciba Japan K.K.), purged with N₂, heated and stirred at 260°C for 60 minutes to obtain a transparent homogeneous solution, and then decompressed to 0.07 kPa or less. 0.1 parts of tetrabutyl titanate was added, and the reaction was terminated when the stirring torque reached 11 kg·m (11 r/min) under the conditions of a pressure of 0.07 kPa or less and a temperature of 260°C. A multilayer fabric structure was obtained in the same manner as in Example 1 except that the reaction time was 2.1 hours, and the polyether ester amide having a crystallization temperature of 115.0°C, an unreacted lactam content of 0.24%, an amino group amount of 0.48 × 10⁻⁵ eq/g, and a melt viscosity of 920 poise (92 Pa·s) was obtained.

The obtained resin layer had no interconnected pores and was non-porous. In addition, the island phase was made of polyamide 6, and the sea phase was made of polyether ester amide.

The configurations and various evaluation results of the obtained face fabric, resin layer, and multilayer fabric structure are shown in Table 1. The results were excellent waterproof moisture permeability and motion comfort, and sufficient moisture and heat resistance although the water resistance in the accelerated degradation test (7 days) was 165 kPa, which was slightly inferior to that in Example 1.

### [Example 4]

A multilayer fabric structure was obtained in the same manner as in Example 1 except that the warp of the woven fabric of Example 1 was used without being falsely twisted.

The configurations and various evaluation results of the obtained face fabric, resin layer, and multilayer fabric structure are shown in Table 1. Although the motion comfort was slightly inferior to that of Example 1, the results were excellent waterproof moisture permeability, and excellent moisture and heat resistance with a water resistance of 230 kPa in the accelerated degradation test (7 days).

### [Example 5]

A multilayer fabric structure was obtained in the same manner as in Example 1 except that the filament used in the woven fabric and the half tricot of Example 1 was polyamide 66, the polymer used in the resin layer was polyamide 66, a copolymer of polyamide 66, an ethylene oxide adduct of bisphenol A, polyethylene glycol, and terephthalic acid was used, the melt viscosity was 920 poise (92 Pa·s), and the melt processing temperature was 280°C. The obtained resin layer had no interconnected pores and was non-porous. In addition, the island phase was made of polyamide 6, and the sea phase was made of polyether ester amide. The fiber in the multilayer fabric structure accounted for 100 mass% of the polyamide 66 fiber, and the major repeating unit in the polymer constituting the fiber also accounted for 100 mass% of the polyamide 66 unit.

The configurations and various evaluation results of the obtained face fabric, resin layer, and multilayer fabric structure are shown in Table 1. The results were excellent waterproof moisture permeability and excellent moisture and heat resistance with a water resistance of 230 kPa in the accelerated degradation test (7 days).

### [Example 6]

A multilayer fabric structure was obtained in the same manner as in Example 1 except that prior to film formation of the resin layer of Example 1, polyamide 6 with a melt viscosity of 960 poise (96 Pa·s), rutile-type titanium dioxide, and a hindered phenol antioxidant were pelletized, and the resulting pellets and the polyether ester amide (A) pellets were melt-extruded using a single-screw extruder and a T-slit die to fabricate an unstretched film (resin layer) under the condition that the blending ratio of each component when the resin layer was formed was set to be the same as that of the resin layer in Example 1. The obtained resin layer had no interconnected pores and was non-porous. In addition, the island phase was made of polyamide 6, and the sea phase was made of polyether ester amide (A).

The configurations and various evaluation results of the obtained face fabric, resin layer, and multilayer fabric structure are shown in Table 1. The average diameter of the island phase in the resin layer was 190 nm, and the water resistance in the accelerated degradation test (7 days) was 185 kPa, which was slightly inferior to that in Example 1, but excellent moisture and heat resistance was obtained.

### [Example 7]

A multilayer fabric structure was obtained in the same manner as in Example 1 except that polyamide 6 having a melt viscosity of 1030 poise (103 Pa·s) was used in formation of the resin layer in Example 1. The obtained resin layer had no interconnected pores and was non-porous. In addition, the island phase was made of polyamide 6, and the sea phase was made of polyether ester amide (A).

The configurations and various evaluation results of the obtained face fabric, resin layer, and multilayer fabric structure are shown in Table 1. The average diameter of the island phase in the resin layer was 300 nm, and the water resistance in the accelerated degradation test (7 days) was 168 kPa, which was slightly inferior to that in Example 1, but excellent moisture and heat resistance was obtained.

### [Example 8]

A multilayer fabric structure was obtained in the same manner as in Example 1 except that in Example 1, pellets of the polyether ester amide (A) and pellets of a polyamide 6 having a melt viscosity of 960 poise (96 Pa·s) were dried at 110°C under reduced pressure for 14 hours to adjust the water content to 300 ppm or less, a total of 100 parts of 80 parts of the polyether ester amide (A), 17 parts of the polyamide 6, 0.1 parts of a chelating agent based on octadecyl phosphate ("ADK STAB" (registered trademark) AX-71, manufactured by ADEKA Corporation), 1.9 parts of rutile type titanium oxide, and 1 part of hindered phenol antioxidant were melt kneaded at a cylinder temperature set to 255°C using a twin screw extruder having a three-start screw with a diameter of 45mmφ, then discharged into a strand shape, cooled in a water bath, and subsequently pelletized into a size of φ3 mm and a length of 3 mm with a pelletizer. The obtained resin layer had no interconnected pores and was non-porous. In addition, the island phase was made of polyamide 6, and the sea phase was made of polyether ester amide (A).

The configurations and various evaluation results of the obtained face fabric, resin layer, and multilayer fabric structure are shown in Table 1. The water resistance in the accelerated degradation test (14 days) was 220 kPa, exhibiting more excellent moisture and heat resistance than in Example 1.

### [Comparative Example 1]

A multilayer fabric structure was obtained in the same manner as in Example 1 except that prior to film formation of the resin layer of Example 1, polyamide 6 with a melt viscosity of 500 poise (50 Pa·s), rutile-type titanium dioxide, and a hindered phenol antioxidant were pelletized, and the resulting pellets and the polyether ester amide (A) pellets were melt-extruded using a single-screw extruder and a T-slit die to fabricate an unstretched film (resin layer) under the condition that the blending ratio of each component when the resin layer was formed was set to be the same as that of the resin layer in Example 1.

The configurations and various evaluation results of the obtained face fabric, resin layer, and multilayer fabric structure are shown in Table 1. The island phase in the resin layer was made of polyamide 6, and the sea phase was made of the polyether ester amide (A). However, the island phases were not continuous (no sea-island structure in which the island phases were continuous), the average diameter was 400 nm, and the water resistance in the accelerated degradation test (7 days) was 109 kPa, which was poor in moisture and heat resistance. In addition, the phase state of the obtained resin layer was a sea-island structure in which the island phases were not continuous as shown in Fig. 2.

### [Comparative Example 2]

A multilayer fabric structure was obtained in the same manner as in Example 3 except that in the fabrication of the resin layer in Example 3, a resin layer was fabricated using 97 parts of a polyamide-based elastomer without using polyamide 6. The obtained resin layer had no interconnected pores and was non-porous.

The configurations and various evaluation results of the obtained face fabric, resin layer, and multilayer fabric structure are shown in Table 1. The resin layer was a single phase, was not a co-continuous layer, and had no island phase. In the accelerated degradation test (7 days), the water resistance was 30 kPa, and the moisture and heat resistance was poor.

### [Comparative Example 3]

A multilayer fabric structure was obtained in the same manner as in Example 1 except that in the fabrication of the resin layer in Example 1, the resin layer was fabricated using 97 parts of polyamide 6 without using the polyamide-based elastomer. The obtained resin layer had no interconnected pores and was non-porous. The resin layer was a single phase, was not a co-continuous layer, and had no island phase. In addition, the obtained multilayer fabric structure had low moisture permeability and was not suitable as a moisture-permeable material.

### [Comparative Example 4]

A multilayer fabric structure was obtained in the same manner as in Comparative Example 2 except that the woven fabric of Comparative Example 2 was used without being false-twisted.

The configurations and various evaluation results of the obtained face fabric, resin layer, and multilayer fabric structure are shown in Table 1. The resin layer was a single phase, was not a co-continuous layer, and had no island phase. The water resistance in the accelerated degradation test (7 days) was 30 kPa, which was poor in moisture and heat resistance, and also poor in motion comfort.

### [Table 1]

**[Table 1]**

| | Configuration of Fabric Multilayer Structure | | | | | Performance of fabric multilayer structure | | | | | |
|---|---|---|---|---|---|---|---|---|---|---|---|
| | Face fabric | | Resin layer | | Backing fabric | Moisture permeability (g/m²·24h) | | Initial water resistance | Water resistance after accelerated degradation test | | Motion comfort |
| | | | | | | | | | 7 days | 14 days | |
| | Elongation in warp direction[%] | Elongation in weft direction[%] | Phase state | Average diameter of island phase [nm] | | A-1 | 3-1 | [kPa] | [kPa] | [kPa] | |
| Example 1 | 10 | 15 | Sea-island phase structure in which island phases are continuous | 140 | PA6 knitted fabric | 4,500 | 23,000 | 230 | 230 | 150 | A |
| Example 2 | 10 | 15 | Sea-island phase structure in which island phases are continuous | 140 | Absent | 4,500 | 25,000 | 230 | 230 | 150 | A |
| Example 3 | 10 | 15 | Sea-island phase structure in which island phases are continuous | 150 | PA6 knitted fabric | 8,000 | 50,000 | 230 | 165 | 115 | A |
| Example 4 | 5 | 15 | Sea-island phase structure in which island phases are continuous | 140 | PA6 knitted fabric | 4,500 | 23,000 | 230 | 230 | 150 | 3 |
| Example 5 | 10 | 15 | Sea-island phase structure in which island phases are continuous | 150 | PA66 knitted fabric | 4,400 | 20,000 | 230 | 230 | 150 | A |
| Example 6 | 10 | 15 | Sea-island phase structure in which island phases are continuous | 190 | PA6 knitted fabric | 4,500 | 23,000 | 230 | 185 | 120 | A |
| Example 7 | 10 | 15 | Sea-island phase structure in which island phases are continuous | 300 | PA6 knitted fabric | 4,500 | 23,000 | 230 | 168 | 117 | A |
| Example 8 | 10 | 15 | Sea-island phase structure in which island phases are continuous | 140 | PA6 knitted fabric | 4,500 | 23,000 | 230 | 230 | 220 | A |
| Comparative Example 1 | 10 | 15 | Sea-island phase structure in which island phase is not continuous | 400 | PA6 knitted fabric | 4,400 | 22,000 | 230 | 109 | 50 | A |
| Comparative Example 2 | 10 | 15 | Single phase | - | PA6 knitted fabric | 5,500 | 40,000 | 130 | 30 | 10 | A |
| Comparative Example 3 | 10 | 15 | Single phase | - | PA6 knitted fabric | 2,000 | 2,000 | 230 | 230 | 230 | A |
| Comparative Example 4 | 5 | 5 | Single phase | - | PA6 knitted fabric | 5,500 | 40,000 | 130 | 30 | 10 | C |

As shown above, the multilayer fabric structures produced in Examples 1 to 8 had excellent moisture and heat resistance and a high practical waterproof breathable function. In addition, the multilayer fabric structure substantially was made of polyamide, and many monomers were common as constituent monomers, and had high recyclability in terms of both material recycling and chemical recycling.

### INDUSTRIAL APPLICABILITY

The multilayer fabric structure of the present invention has high moisture permeability and waterproofness and is excellent in durability, and thus can be suitably used in the field of waterproof breathable garment materials such as outdoor clothing including fishing and mountain climbing wear, sportswear such as ski or snowboard wear, windbreaker, athletic wear, golf wear, and tennis wear, uniform wear, rain coat such as rainwear, casual wear, and work wear, and gloves, shoes, glove inserts, and boot inserts. In addition, the multilayer fabric structure of the present invention can be suitably recycled after functioning as the above applications, and is also superior in recyclability.

### DESCRIPTION OF REFERENCE SIGNS

- A.:: Island phase example
- B.:: Island phase example

## Claims

1. A multilayer fabric structure comprising:
a woven or knitted fabric; and
a non-porous resin layer on the woven or knitted fabric, wherein
the resin layer includes a resin A and an elastomer B,
the resin A and the elastomer B are a combination of either a polyamide and a polyamide-based elastomer or a polyester and a polyester-based elastomer, and
a phase of the resin A and a phase of the elastomer B have a co-continuous structure or a sea-island structure in which island phases are continuous.

2. The multilayer fabric structure according to claim 1, wherein the resin A and the elastomer B are a combination of the polyamide and the polyamide-based elastomer.

3. The multilayer fabric structure according to claim 2, wherein the polyamide-based elastomer is a polyether ester amide including, as a copolymer component, dioxyethylene ether having a bisphenol A skeleton represented by a following structural formula (1):

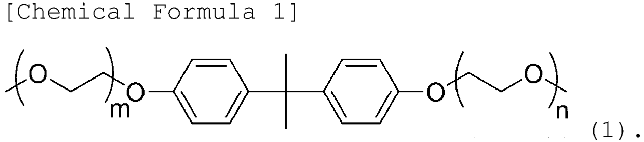

4. The multilayer fabric structure according to claim 2 or 3, wherein
the phase of the resin A and the phase of the elastomer B have a sea-island structure in which island phases are continuous,
the island phase comprises the polyamide and the sea phase comprises the polyamide-based elastomer, and
the island phase has an average diameter of 5 to 200 nm.

5. The multilayer fabric structure according to any one of claims 2 to 4, wherein the woven or knitted fabric comprises polyamide.

6. The multilayer fabric structure according to claim 5, wherein the fiber constituting the woven or knitted fabric is a fiber containing polyamide 6 as a major component, the resin A is polyamide 6, and the elastomer B is a polyamide 6-based elastomer.

7. The multilayer fabric structure according to any one of claims 1 to 6, wherein a moisture permeability in accordance with JIS L1099:2021 (A-1 method) is 3500 g/m²·24h or more, and a moisture permeability in accordance with JIS L1099:2021 (B-1 method) is 10000 g/m²·24h or more.

8. The multilayer fabric structure according to any one of claims 1 to 7, wherein the woven or knitted fabric has an elongation of 10% or more in at least one of a warp direction and a weft direction in accordance with JIS L1096:2010 elongation A method (constant rate of extension).

9. A waterproof breathable garment comprising the multilayer fabric structure according to any one of claims 1 to 8.
